# EUROPÄISCHE PATENTSCHRIFT

(11) **EP 1 181 088 B1**
(45) Veröffentlichungstag und Bekanntmachung des Hinweises auf die Patenterteilung: **16.04.2003**
(21) Anmeldenummer: 00929307.7
(22) Anmeldetag: 25.04.2000
(51) Int. Cl.: B01D 53/86, B01J 23/22, B01J 23/30

(54) **VERFAHREN ZUR HERSTELLUNG EINES KATALYSATORS SOWIE VERWENDUNG DES KATALYSATORS ZUM ABBAU VON DIOXINEN UND/ODER FURANEN**
METHOD FOR PRODUCING A CATALYST AND USE OF THE CATALYST FOR DEGRADING DIOXINS AND/OR FURANS
PROCEDE DE PREPARATION D'UN CATALYSEUR ET UTILISATION DE CE CATALYSEUR POUR LA DEGRADATION DE DIOXINES ET/OU DE FURANES

(30) Priorität: 07.05.1999 DE 19921207
(43) Veröffentlichungstag der Anmeldung: 27.02.2002
(73) Patentinhaber: SIEMENS AKTIENGESELLSCHAFT, 80333 München (DE)
(72) Erfinder: WITZEL, Frank, Bloomfield Hills, MI 48304 (US); PAJONK, Günther, D-96199 Zapfendorf (DE); FISCHER, Stefan, D-96215 Lichtenfels (DE)
(86) Internationale Anmeldenummer: DE0001273
(87) Internationale Veröffentlichungsnummer: WO00067880

(56) Entgegenhaltungen:
- EP-A- 0 313 755
- EP-A- 0 472 014
- EP-A- 0 514 682
- EP-A- 0 815 924

## Beschreibung

Die Erfindung betrifft ein Verfahren zur Herstellung einer katalytisch aktiven Masse, wobei Titandioxid zusammen mit einem Oxid oder einer gelösten Verbindung von Wolfram und/oder Vanadium zu einer formbaren Masse verarbeitet, die formbare Masse zu einem Formkörper getrocknet und der Formkörper calciniert wird. Die Erfindung betrifft weiter einen Katalysator mit einer derart hergestellten katalytisch aktiven Masse sowie die Verwendung des Katalysators zum Abbau von Dioxinen und/oder Furanen.

Ein derartiges Verfahren zur Herstellung einer katalytisch aktiven Masse sowie ein derartiger Katalysator sind beispielsweise aus der DE 24 58 888 A1, der EP 0 815 924 A, der EP 0 472 014 A oder der EP 0 313 755 A bekannt. Die Verwendung von Titandioxid-haltigen Katalysatoren zum Abbau von Dioxinen und/oder Furanen ist weiter aus der EP 0 471 033 B1, der EP 0 252 521 A1, der EP 0 472 014 A oder der WO 91/04780 bekannt.

Wie im obengenannten Stand der Technik ausführlich geschildert, wird zum Herstellen der katalytisch aktiven Masse das Titandioxid unter Zugabe eines Lösungsmittels mit Wolframund/oder Vanadiumoxid zunächst zu einer formbaren Masse verarbeitet. Die formbare Masse kann alternativ auch durch Zugabe von Titandioxid zu einer gelösten Verbindung von Wolfram und/oder Vanadium hergestellt werden. Als solche gelöste Verbindungen werden beispielsweise Ammoniumparawolframat oder Vanadylsulfat eingesetzt. Die Formbarkeit der Masse wird durch den Gehalt an Lösungsmittel beeinflußt. Selbstverständlich können der formbaren Masse Zuschlagstoffe wie z.B. keramische Fasern, Glasfasern und/oder Filmbildehilfsmittel beigemengt werden.

Die formbare Masse wird dann beispielsweise zu einem Wabenkörper mit durchströmbaren Kanälen extrudiert, zu Pellets weiterverarbeitet oder aber als Beschichtung auf einen Tragkörper aufgebracht. Die Beschichtung des Tragkörpers geschieht dabei durch Aufwalzen der Masse oder aber durch Eintauchen. Die extrudierte oder weiterverarbeitete Masse wird anschließend getrocknet und wird im weiteren als "Formkörper" bezeichnet. Zur Ausbildung der katalytischen Aktivität wird anschließend der Formkörper calciniert.

Aus der derart hergestellten katalytisch aktiven Masse bestehende Vollkörper oder aber mit dieser Masse beschichtete Tragkörper sind als Katalysatoren zum Abbau von Stickoxiden gemäß dem SCR-Verfahren oder zum Abbau von Dioxinen und/oder Furanen vielfach im Einsatz. Bei dem SCR-Verfahren, d.h. dem Verfahren der Selektiven Katalytischen Reduktion, werden Stickoxide in Gegenwart eines Reduktionsmittels an der katalytisch aktiven Masse zu ungefährlichem Stickstoff und Wasser umgesetzt. Dioxine und/oder Furane werden an der katalytisch aktiven Masse zu unschädlichen Verbindungen oxidiert.

Zum Abbau von Dioxinen und/oder Furanen, worunter hier die polyhalogenierten zyklischen Diether und Ether verstanden werden, werden Katalysatoren mit der oben angegebenen katalytisch aktiven Masse bei Temperaturen zwischen 250 und 350 °C eingesetzt. Unterhalb von 250 °C wird jedoch die katalytische Aktivität der aktiven Masse zu gering, um noch eine effektive Minderung der halogenierten Kohlenwasserstoffe zu erzielen. Solch niedrige Temperaturen treten jedoch beispielsweise im Abgas einer Müllverbrennungsanlage oder einer Sinteranlage auf. Auch ist bekannt, daß bei Temperaturen unterhalb von 200 °C durch die sogenannte DeNOVO-Synthese bei Vorhandensein von organischen Kohlenstoffverbindungen, Alkali- oder Erdalkali-Chloriden sowie als Katalysatoren wirkenden Metallverbindungen Dioxine und/oder Furane beim Abkühlen im Abgas von neuem gebildet werden. Auch in einem solchen Fall wird eine Behandlung des Abgases in einem Temperaturbereich erforderlich, in welchem die katalytische Aktivität des genannten Katalysators nicht mehr ausreichend ist.

Aufgabe der Erfindung ist es, ein Verfahren zur Herstellung einer katalytisch aktiven Masse der eingangs genannten Art anzugeben, mit dem sich eine katalytisch aktive Masse herstellen läßt, die insbesondere bei Temperaturen von unterhalb 250 °C eine gegenüber einer katalytisch aktiven Masse gemäß Stand der Technik verbesserte katalytische Aktivität aufweist. Weiter ist es Aufgabe der Erfindung, einen Katalysator der eingangs genannten Art anzugeben, mit dem sich auch noch bei tiefen Temperaturen ein effektiver Abbau von Schadstoffen, und insbesondere von Dioxinen und/oder Furanen, erzielen läßt. Ferner ist es Aufgabe der Erfindung, eine Verwendung für einen derartigen Katalysator anzugeben.

Hinsichtlich des Herstellungsverfahrens wird die Aufgabe erfindungsgemäß dadurch gelöst, daß bei einem Verfahren der eingangs genannten Art der Formkörper zusätzlich mit einer gelösten Verbindung von Titan und Vanadium getränkt und erneut getrocknet wird.

Umfangreiche Untersuchungen haben gezeigt, daß eine derart nachbehandelte katalytisch aktive Masse eine ausgezeichnete katalytische Aktivität, insbesondere zur Oxidation von Dioxinen und/oder Furanen, in einem Temperaturbereich von unterhalb 250 °C aufweist. Auch bei Temperaturen von oberhalb 250 °C zeigt eine solche nachbehandelte katalytisch aktive Masse gegenüber nicht nachbehandelten katalytisch aktiven Massen eine verbesserte katalytische Aktivität.

Es wird vermutet, daß sich durch das nachträgliche Tränken mit einer Titan und Vanadium enthaltenden Lösung und durch das anschließende Trocknen eine extrem aktive, bislang jedoch noch nicht erfaßte Vanadyl-Titanyl-Verbindung ausbildet.

Vorteilhafterweise wird der Formkörper nach dem Calcinieren getränkt. Zwar kann prinzipiell der noch nicht calcinierte Formkörper ebenfalls mit der Lösung getränkt werden, jedoch ist dabei besondere Vorsicht geboten, da der nicht-calcinierte Formkörper in Lösung leicht zerfällt.

Von Vorteil für die katalytische Aktivität ist es, wenn für den Tränkvorgang eine Lösung mit einem Molverhältnis von Titan zu Vanadium zwischen 0,1 und 10 verwendet wird. Innerhalb dieses Molverhältnisses lassen sich die besten Resultate hinsichtlich der katalytischen Aktivität erzielen.

Vorteilhafterweise wird der Formkörper mit einer Lösung von Vanadylsulfat und Titanylsulfat getränkt. Sowohl Vanadylsulfat als auch Titanylsulfat zeigen eine ausgezeichnete Löslichkeit und dies insbesondere in Wasser. Selbstverständlich kann jedoch anstelle von Vanadylsulfat auch eine andere Verbindung, wie z.B. Ammoniummetavanadat, verwendet werden, welche in organischen Lösungsmitteln lösbar ist. Anstelle von Titanylsulfat könnten Titansäuren verwendet werden.

Vorteilhafterweise ist in der Lösung zusätzlich Wolfram gelöst. Auch dadurch läßt sich die katalytische Aktivität der katalytisch aktiven Masse günstig beeinflussen.

Als lösliche Verbindung für Wolfram bietet sich Ammoniumparawolframat an, welches wie Titanylsulfat und Vanadylsulfat ebenfalls eine gute Löslichkeit in Wasser zeigt. Daneben kann jedoch auch Ammoniumheptawolframat verwendet werden, welches sich in heißem Wasser oder in starker Säure ebenfalls lösen läßt.

Sowohl bezüglich Umweltaspekten als auch bezüglich der Kosten ist es von Vorteil, wenn als Lösung eine wäßrige Lösung verwendet wird. Auf teure und gegebenenfalls umweltschädigende organische Lösungsmittel und Säuren kann dadurch bei der Herstellung gänzlich verzichtet werden.

Hinsichtlich der katalytischen Aktivität ist es weiter von Vorteil, wenn die erneute, nach dem Tränkvorgang erfolgende Trocknung bei einer Temperatur zwischen 250 und 400 °C erfolgt. Diese Temperatur sollte insbesondere so gewählt werden, daß sie oberhalb der späteren Einsatztemperatur der katalytisch aktiven Masse liegt.

In einer weiteren vorteilhaften Ausgestaltung der Erfindung erfolgt das Calcinieren bei einer Temperatur zwischen 500 und 600 °C.

Die Aufgabe hinsichtlich des Katalysators wird durch einen Katalysator gelöst, welcher eine erfindungsgemäß hergestellte katalytisch aktive Masse umfaßt.

Die Aufgabe bezüglich des Einsatzbereiches wird erfindungsgemäß durch die Verwendung eines derartigen Katalysators zum Abbau von Dioxinen und/oder Furanen gelöst. Insbesondere bietet sich hier der Einsatz des Katalysators im Tieftemperaturbereich bei Temperaturen von unterhalb 250 °C an.

Ausführungsbeispiele der Erfindung werden anhand einer Zeichnung sowie anhand von Beispielen näher erläutert.

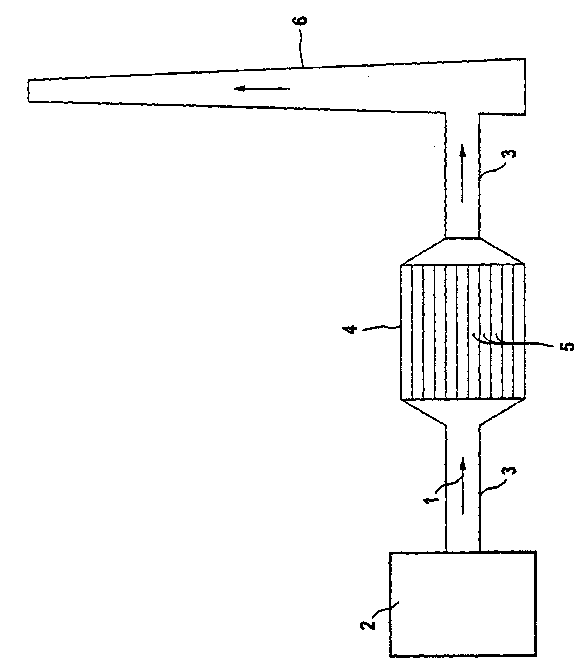

Dabei zeigt die Figur einen durchströmbaren Katalysatorkörper im Abgaskanal einer nicht näher dargestellten Müllverbrennungsanlage.

Gemäß der Figur wird das Abgas 1 einer nicht näher dargestellten Müllverbrennungsanlage 2 in einen Abgaskanal 3 abgezogen. In der Müllverbrennungsanlage 2 wird insbesondere Hausmüll mit hohem Kunststoffanteil verbrannt, so daß in dem Abgas 1 in nicht unerheblichem Umfang halogenierte Kohlenwasserstoffe und insbesondere Dioxine und/oder Furane enthalten sind.

Zur Minderung der Dioxine und/oder Furane ist in dem Abgaskanal 3 der Müllverbrennungsanlage 2 ein durchströmbarer Katalysator 4 in Wabenform angeordnet. Der Katalysator 4 weist hierzu eine Anzahl von durchströmbaren, parallelen Kanälen 5 auf. Der Katalysator 4 ist als ein Vollextrudat aus einer katalytisch aktiven Masse hergestellt, welche 80 Gew.-% Titandioxid, 8 Gew.-% Wolframtrioxid, 6 Gew.-% Vanadiumpentoxid und einen Rest aus keramischen Hilfs- und Füllstoffen enthält. Die katalytisch aktive Masse wurde durch Vermischen der Oxide, anschließendem Trocknen zu einem Formkörper und abschließendem Calcinieren bei 550 °C hergestellt. Anschließend erfolgte die Tränkung des Formkörpers mit einer wäßrigen Lösung aus Vanadylsulfat, Titanylsulfat und Ammoniumparawolframat. Das Molverhältnis von Titan zu Vanadium betrug in der wäßrigen Lösung 0,4; das Molverhältnis von Titan zu Wolfram betrug 30. Die wäßrige Tränklösung wurde mit Schwefelsäure auf einen pH-Wert zwischen 0 und 2 eingestellt. Andere Mineralsäuren führen zu einer nachteiligen Beladung des Katalysators mit störenden Chlorid- oder Phosphationen. Nach Tränkung des Formkörpers erfolgte eine erneute Trocknung bei 250 °C mit einer Dauer zwischen 1 und 30 Minuten.

Das Abgas 1 der Müllverbrennungsanlage 2 hat eine Temperatur von etwa 250 °C. Die in dem Abgas 1 enthaltenen Dioxine und/oder Furane werden an dem Katalysator 4 durch Oxidation umgesetzt. Das nach Durchströmen des Katalysators 4 von Dioxinen und/oder Furanen befreite Abgas 1 gelangt über einen Kamin 6 in die Umwelt.

Die Oxidationsfähigkeit des angegebenen Katalysators für Dioxine und/oder Furane wird durch folgende Beispiele gezeigt:

### Beispiel 1

Über einen als Vollextrudat in Form eines durchströmbaren Wabenkörpers ausgebildeten Katalysator der Zusammensetzung 80 % TiO₂, 6 % V₂O₅, 8 % WO₃, 6 % Hilfsstoffe (Angaben in Gew.-%), welcher, wie oben angegeben, mit einer wäßrigen Vanadylsulfat/Titanylsulfat-Lösung getränkt und anschließend bei 250 °C getrocknet wurde, wird ein Modellabgas mit einer Raumgeschwindigkeit von 5000/h bei unterschiedlichen Temperaturen zwischen 130 und 250 °C geleitet. Der Katalysator weist eine quadratische Anströmfläche von 150 · 150 mm² und 1225 parallele Strömungskanäle auf. Das Modellgas umfaßt 200 ppm Perchlorethen in Luft. Perchlorethen wird als Modellsubstanz für Dioxin verwendet. Der Sauerstoffanteil in der Luft beträgt 20 %. Die Konzentration des Perchlorethens wird vor dem Katalysator und nach dem Katalysator in dem Modellgas gemessen.

Zum Vergleich wird derselbe Versuch mit einem hinsichtlich der Zusammensetzung und der Geometrie identischen Katalysator durchgeführt, welcher jedoch anstelle einer Vanadylsulfat/Titanylsulfat-Lösung alleine mit einer Vanadylsulfat-Lösung getränkt worden ist. Auch hier wird die Konzentration des Perchlorethens vor dem Katalysator und nach dem Katalysator in dem Modellgas gemessen.

In der folgenden Tabelle sind die Ergebnisse dargestellt:

| Temperatur °C | Katalysator erfindungsgemäß | Vergleichskatalysator |
|---|---|---|
| | | |
| 130° | 1 | 0,3 |
| 150° | 1 | 0,25 |
| 170° | 1 | 0,2 |
| 200° | 1 | 0,16 |
| 250° | 1 | 0,2 |

In der linken Spalte der Tabelle ist die jeweilige Temperatur des Modellgases aufgeführt. Die gemessenen Konzentrationen des Perchlorethens nach dem Katalysator sind bezüglich des mit der Titanylsulfat-/Vanadylsulfat-Lösung getränkten Katalysators normiert. Es zeigt sich deutlich, daß der Katalysator gemäß Stand der Technik in allen Temperaturbereichen unterhalb 250 °C eine wesentlich geringere katalytische Aktivität aufweist. Der mit der Titanylsulfat-/Vanadylsulfat-Lösung getränkte Katalysator zeigt eine ca. 5fach höhere katalytische Aktivität.

## Patentansprüche

1. Verfahren zur Herstellung einer katalytisch aktiven Masse, wobei Titandioxid zusammen mit einem Oxid oder einer gelösten Verbindung von Wolfram und/oder Vanadium zu einer formbaren Masse verarbeitet, die formbare Masse zu einem Formkörper getrocknet und der Formkörper calciniert wird,
**dadurch gekennzeichnet, daß** der Formkörper noch zusätzlich mit einer Titan und Vanadium enthaltenden Lösung getränkt und erneut getrocknet wird.

2. Verfahren nach Anspruch 1,
**dadurch gekennzeichnet, daß** der Formkörper nach dem Calcinieren getränkt wird.

3. Verfahren nach Anspruch 1 oder 2,
**dadurch gekennzeichnet, daß** eine Lösung mit einem Molverhältnis von Titan zu Vanadium zwischen 0.1 und 10 verwendet wird.

4. Verfahren nach einem der Ansprüche 1 bis 3,
**dadurch gekennzeichnet, daß** der Formkörper mit einer Lösung von Vanadylsulfat und Titanylsulfat getränkt wird.

5. Verfahren nach einem der Ansprüche 1 bis 4,
**dadurch gekennzeichnet, daß** in der Lösung zusätzlich Wolfram gelöst ist.

6. Verfahren nach Anspruch 5,
**dadurch gekennzeichnet, daß** eine Lösung mit einem Molverhältnis von Titan zu Wolfram zwischen 10 und 100 verwendet wird.

7. Verfahren nach Anspruch 5 oder 6,
**dadurch gekennzeichnet, daß** in der Lösung Ammoniumparawolframat gelöst wird.

8. Verfahren nach einem der Ansprüche 1 bis 7,
**dadurch gekennzeichnet, daß** als Lösung eine wäßrige Lösung verwendet wird.

9. Verfahren nach einem der Ansprüche 1 bis 8,
**dadurch gekennzeichnet, daß** die erneute Trocknung bei einer Temperatur zwischen 250 und 400 °C erfolgt.

10. Verfahren nach einem der Ansprüche 1 bis 9,
**dadurch gekennzeichnet, daß** das Calcinieren bei einer Temperatur zwischen 500 und 600 °C erfolgt.

11. Katalysator (4) mit einer nach einem der Ansprüche 1 bis 10 hergestellten katalytisch aktiven Masse.

12. Verwendung des Katalysators (4) nach Anspruch 11 zum Abbau von Dioxinen und/oder Furanen.

## Claims

1. Process for producing a catalytically active material, in which titanium dioxide together with an oxide or a dissolved compound of tungsten and/or vanadium is processed to form a shapeable material, the shapeable material is dried to form a shaped body and the shaped body is calcined, **characterized in that** the shaped body is additionally impregnated with a titanium- and vanadium- containing solution and is dried again.

2. Process according to Claim 1, **characterized in that** the shaped body is impregnated after the calcination.

3. Process according to Claim 1 or 2, **characterized in that** a solution with a titanium to vanadium molar ratio of between 0.1 and 10 is used.

4. Process according to one of Claims 1 to 3, **characterized in that** the shaped body is impregnated with a solution of vanadyl sulphate and titanyl sulphate.

5. Process according to one of Claims 1 to 4, **characterized in that** tungsten is additionally dissolved in the solution.

6. Process according to Claim 5, **characterized in that** a solution with a titanium to tungsten molar ratio of between 10 and 100 is used.

7. Process according to Claim 5 or 6, **characterized in that** ammonium paratungstate is dissolved in the solution.

8. Process according to one of Claims 1 to 7, **characterized in that** the solution used is an aqueous solution.

9. Process according to one of Claims 1 to 8, **characterized in that** the further drying takes place at a temperature of between 250 and 400°C.

10. Process according to one of Claims 1 to 9, **characterized in that** the calcining takes place at a temperature of between 500 and 600°C.

11. Catalytic converter (4) having a catalytically active material produced according to one of Claims 1 to 10.

12. Use of the catalytic converter (4) according to Claim 11 for breaking down dioxins and/or furans.

## Revendications

1. Procédé de préparation d'une masse catalytiquement active, du dioxyde de titane ensemble avec un oxyde ou un composé dissous de tungstène et/ou de vanadium étant transformé en une masse moulable et la masse moulable étant transformée en une pièce moulée et la pièce moulée étant calcinée,
**caractérisé en ce que** l'on imprègne la pièce moulée encore supplémentairement d'une solution contenant du titane et du vanadium et **en ce qu'**on la resèche.

2. Procédé suivant la revendication 1,
**caractérisé en ce que** l'on imprègne la pièce moulée après la calcination.

3. Procédé suivant la revendication 1 ou 2,
**caractérisé en ce que** l'on utilise une solution ayant un rapport en mole du titane au vanadium compris entre 0,1 et 10.

4. Procédé suivant l'une des revendications 1 à 3,
**caractérisé en ce que** l'on imprègne la pièce moulée d'une solution de sulfate de vanadyle et de sulfate de titanyle.

5. Procédé suivant l'une des revendications 1 à 4,
**caractérisé en ce que** l'on dissout dans la solution en plus du tungstène.

6. Procédé suivant la revendication 5,
**caractérisé en ce que** l'on utilise une solution ayant un rapport en mole du titane au tungstène compris entre 10 et 100.

7. Procédé suivant la revendication 5 ou 6,
**caractérisé en ce que** l'on dissout dans la solution du paratungstanate d'ammonium.

8. Procédé suivant l'une des revendications 1 à 7,
**caractérisé en ce que** l'on utilise comme solution une solution aqueuse.

9. Procédé suivant l'une des revendications 1 à 8,
**caractérisé en ce que** l'on effectue le reséchage à une température comprise entre 250 et 400°C.

10. Procédé suivant l'une des revendications 1 à 9,
**caractérisé en ce que** l'on effectue la calcination à une température comprise entre 500 et 600°C.

11. Pot (4) catalytique ayant une masse active catalytiquement préparée suivant l'une des revendications 1 à 10.

12. Utilisation du pot (4) catalytique suivant la revendication 11 pour décomposer des dioxines et/ou des furanes.
